# EUROPEAN PATENT SPECIFICATION

(11) **EP 0 383 427 B1**
(45) Date of publication and mention of the grant of the patent: **02.11.1994**
(21) Application number: 90300201.2
(22) Date of filing: 08.01.1990
(51) Int. Cl.: G09F 15/00, E04B 2/82

(54) **Display panel assembly**
Reklametafel-Bausatz
Assemblage d'un panneau de publicité

(30) Priority: 14.02.1989 GB 8903297
(43) Date of publication of application: 22.08.1990
(73) Proprietor: Developmental Display Limited, GB-Basildon, Essex SS13 1LN (GB)
(72) Inventor: Pritchard, Adrian Marcus, Bengeo Hertford SG14 3LY (GB)
(74) Representative: Nash, Keith Wilfrid

(56) References cited:
- EP-A- 0 292 833
- DE-A- 3 201 160
- FR-A- 2 553 217
- FR-A- 2 576 764
- GB-A- 1 542 244

## Description

### Field of the invention

This invention relates to an assembly for supporting display panels.

### Background to the invention

A variety of arrangements of assemblies for supporting display panels are known. Some such arrangements comprise two or more pivotally connected frames which may also offer the possibility of stacking one on top of the other. Such frames are thus of a modular nature, and can be interconnected to form an assembly of any desired size, not only in width but possibly also in height. The assembly usually stands simply by pivotting the frames, when upright, into a non-coplanar relationship. Generally, each frame is capable of holding a display panel in the median plane of said frame.

In particular, in EP No 0292833 is disclosed a display panel assembly comprising at least two frames, each having parallel uprights on opposite sides thereof, two adjacent uprights of two adjacent frames being pivotally connected to allow the plane of one frame to be variably angled relative to the plane of the other frame, each upright of a frame having external, spaced, longitudinally extending ribs directed towards corresponding ribs on the opposite upright, thereby to define coplanar slots for receiving edges of two display panels on opposite sides of the median plane of the frame, the frames also having cross members shaped with panel receiving slots in the same two planes, so that two display panels can each be held all round its periphery in the two planes on opposite sides of said median plane.

With this known arrangement either one panel can be removed from the frame only by first disconnecting a cross member.

It is a general object of this invention to provide an improved display panel assembly generally having the afore-mentioned characteristics but of improved versatility compared to known arrangements.

### The invention

According to the invention, there is provided a display panel assembly comprising at least two frames each having parallel uprights on opposite sides thereof, two adjacent uprights of two adjacent frames being pivotally connected to allow the plane of one frame to be variably angled relative to the plane of the other frame, each upright of a frame having two external, spaced, longitudinally extending ribs directed towards the corresponding ribs on the opposite upright, thereby to define opposed coplanar slots for receiving opposite edges of a display panel, the frames also each having cross members connecting the uprights, the cross members being shaped to define display panel-receiving slots coplanar with the slots in the upright, characterised in that the said slots are arranged to receive a display panel in the median plane of the frame, and in that the cross members but not the uprights also have parts which define panel-receiving slots in spaced planes parallel to and on both sides of said median plane of the frame.

The assembly in accordance with the invention thus offers the possibility, in each frame, of locating a display panel in any one of three planes, or of locating two oppositely facing panels in any two of such planes. This greatly increases the versatility and ease of use of the assembly, especially when a display is to be offered on both sides of the assembly, and/or when frequent changing of some of the panels, for example for updating purposes, is required.

Moreover, as panels are held in the two outer planes only by the cross members, either one such panel can readily be removed by hooking it out of position, without disconnecting a cross member.

Preferably, therefore, each cross member comprises two elongate elements, the first element providing the surfaces which are coplanar with the outer faces of the ribs on the uprights and the second element having ribs which, with the said surfaces of the first part, define the slots in the outer planes. The two elements may interconnect by means of a dovetail-type joint, being slid longitudinally into engagement with one another (before assembly of the frame). In addition, the outer surfaces of the second elements, which surfaces lie in planes normal to the plane of the frame to define the top and bottom peripheral edge faces of the frame, may have longitudinal grooves and/or longitudinal projections which mate with the grooves, enabling the frames to be stacked in coplanar relationship, so that an assembly of a required height can be produced.

An important subsidiary feature of the assembly of the invention concerns the construction of the frame uprights.

These uprights are preferably of tubular form, each slotted or slottable to accommodate a toothed member which will mate with a corresponding toothed member inserted in a slot of an upright of an adjacent frame, thereby in conjunction with a bridging element interconnecting the axes of the two tubular uprights to provide the pivotal connection between the two uprights, and thus between the two frames. Preferably two such pivotal connections are provided, respectively adjacent the top of the bottom of the two frames. Each pair of toothed members may itself be slotted to accommodate the bridging element. The angular extent of the slots in the uprights is preferably large enough to permit relative rotation of the two frames through 360 degrees.

Assembly of the pivotal interconnections is enabled by the open ends of the tubular uprights, which permit headed locating screws to be fixed in position through central apertures in the gear wheels and in rounded enlargements at the ends of the bridging element. The open ends of the tubular uprights also enable interconnecting pegs to be inserted between the ends of adjoining uprights when frames are stacked on top of one another.

Thus, a preferred construction of upright is an extruded circularly cross-sectioned tube, integrally formed with the afore-mentioned pair of longitudinally extending external ribs, said pair of ribs having inturned lips so as to define an undercut panel-receiving slot. The cross members are preferably shaped to define matching undercut panel-receiving slots in the same plane (the median plane of the frame). A cross member may then be connected to an upright by means of a connecting element having a stem received in a slot in the end face of the cross member and a lug received in the undercut slot of the upright, together with a grub screw screwing laterally into the cross member to engage into a tapered recess or aperture in the stem of the connecting element, whereby said element is drawn into tight engagement with the underside of the lips of the slot-defining ribs of the upright.

In a preferred embodiment, the principal parts of the frame are produced from five extruded sections, e.g. of aluminium, consisting of a tubular section for forming the uprights, a section for forming the first elements of the cross members, respective sections for forming the second elements of the cross members, one with grooves in its outer face and one with projections on its outer face, and a gear wheel section from which the gear wheels are produced by slicing.

### Description of drawings

The display panel assembly in accordance with the invention will now be described by way of example with reference to the accompanying drawings, in which:-
- Figure 1: is a perspective view of a two frame display panel assembly, and showing how two frames may be stacked on top;
- Figures 2A and 2B: show the pivotal connections between the two frames;
- Figures 3 and 4: respectively show alternative cross members of a frame in cross section;
- Figure 5: shows how two display panels may be located in a frame;
- Figure 6: is an exploded view of the parts involved in establishing a rigid connection between the frame uprights and the cross members; and
- Figures 7A and 7B: show cross sectional details of the upright/cross member connection.

### Description of embodiment

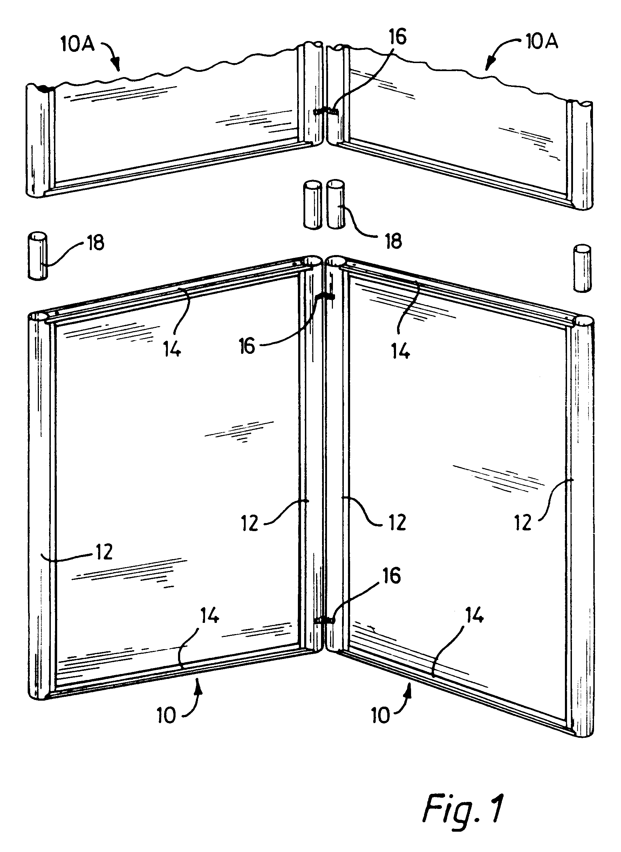

The display panel assembly as illustrated in Figure 1 comprises two rectangular frames 10 each having two uprights 12 and two cross members 14. Two adjacent uprights are pivotally connected at 16, by means later described, so that the angle between the planes of the two frames can be varied.

A second pair of hingedly connected frames 10A can be stacked on top of the first pair of frames 10, using pegs 18 to interconnect the uprights on top of one another.

The assembly may also be extended sideways by providing pivotal connections 16 to additional frames.

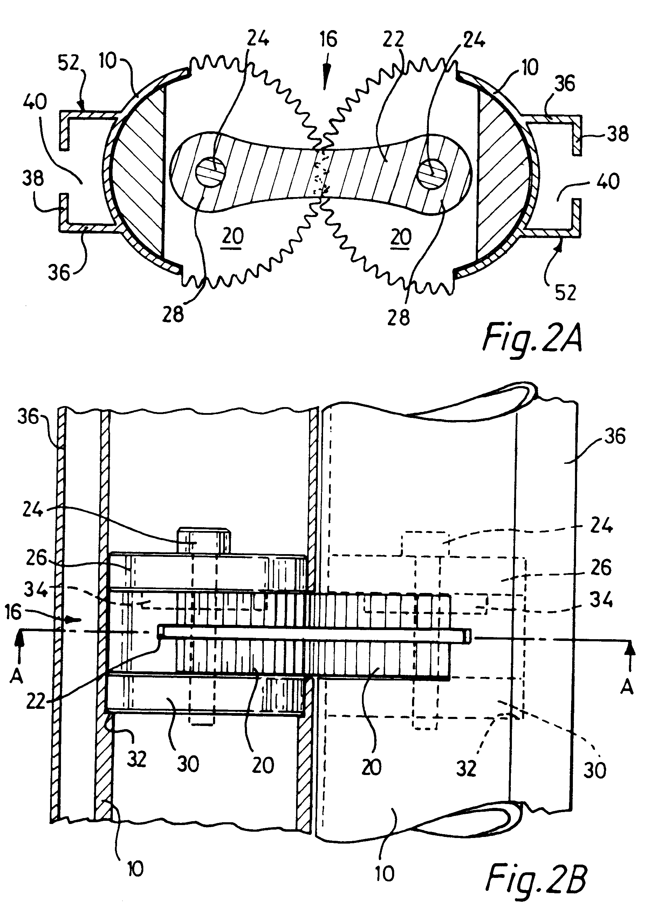

A pivotal connection 16 between two uprights 12 is explained with reference to Figures 2A and 2B.

First, it is to be understood that the uprights each comprise an extruded tubular element, e.g. of aluminium, of circular cross-section. The pivotal connection 16 is defined by two gear wheels 20 inserted into lateral slots cut in the tubular walls of the respective uprights, together with a link 22 interconnecting the axes of the two gear wheels. The gear wheels 20 are themselves laterally slotted to accommodate the link 22, and the assembly is secured by pivot pins 24 having screwthreaded end portions. At each upright 12, the pivot pin 24 is inserted through the open end of the tubular upright, passing through a washer 26, the gear wheel 20 and an enlarged end portion 28 of the link 22, to screw into an internally threaded washer 30 which seats against an internal lip 32 formed in the tube by enlarging the internal diameter of the tube over a portion extending inwardly along the tube from its open end. A bearing for rotation is offered by a central boss 34 on the washer 26, which boss is received in a corresponding recess in the adjacent face of the gear wheel 20.

The angular extent of the lateral slots in the uprights is sufficient to enable relative pivotting of the frames through 360 degrees, i.e. fully folded back against one another in one sense to a fully folded back condition in the opposite sense.

It is also be be observed, from Figure 2A in particular, that each tubular upright 12 is extruded with a pair of spaced, parallel, longitudinally extending external ribs 36 having inturned lips 38. The ribs 36 are directed towards corresponding ribs on the opposite upright of a frame, whereby an undercut slot 40 for receiving the edges of a display panel is defined in the median plane of the frame.

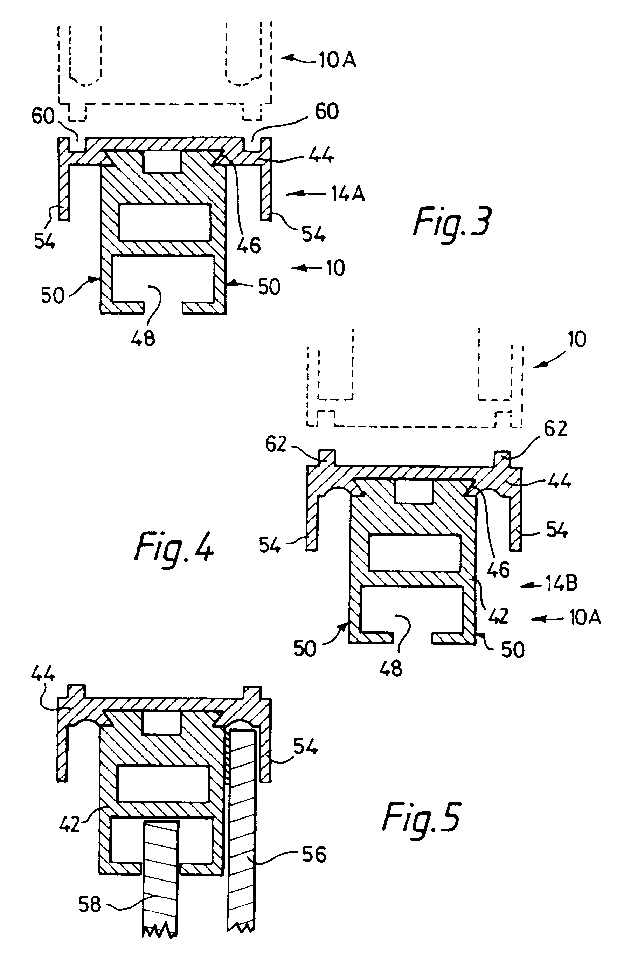

Referring now to Figures 3 and 4, alternative cross members 14A and 14B are illustrated.

The cross member 14A or 14B comprises a first element 42 extruded of aluminium and a second element 44 also extruded of aluminium, which fit together by longitudinal relative sliding, before the frame is assembled, by means of a dovetail-type joint 46.

The first element 42 is shaped to define an undercut slot 48 coplanar with the above-described undercut slots 40 in the frame uprights, whereby a slot is provided in the median plane of the frame for receiving all four edges of a panel to be displayed. Additionally, however, the side faces 50 of the first element are, when the frame is assembled, coplanar with the outside faces 52 (see Figure 2A) of the ribs 36 on the uprights.

The second element 44 has ribs 54 which, in conjunction with the side faces 50, define slots in which the top and bottom edges of another display panel may be received, as for example indicated at 56 in figure 5, wherein 58 designates a display panel located in the median plane of the frame.

The difference between the cross members of Figures 3 and 4 is that, in the embodiment of Figure 3, the outside edge face of the second element 44, which provides the outside edge faces of the complete frame at the top and bottom thereof, is formed with grooves 60, whilst the corresponding face of the second element 44 is formed with matching projections 62. Thus, a frame 10A having a bottom cross member according to Figure 4 will stack on top of a frame 10 having a top cross member according to Figure 3, with the projections 62 mating with the grooves 60, as indicated in Figure 3. The reverse situation is indicated in Figure 4. As previously mentioned, the tubular uprights of stacked frames are interconnected by pegs 18 (see Figure 1).

In general it is preferred, although by no means essential, for any one frame to be formed with both top and bottom cross members of the same type.

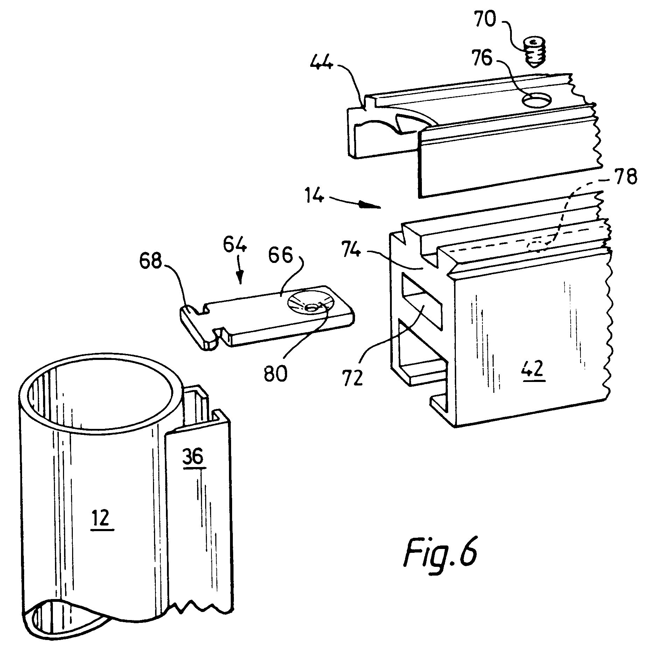

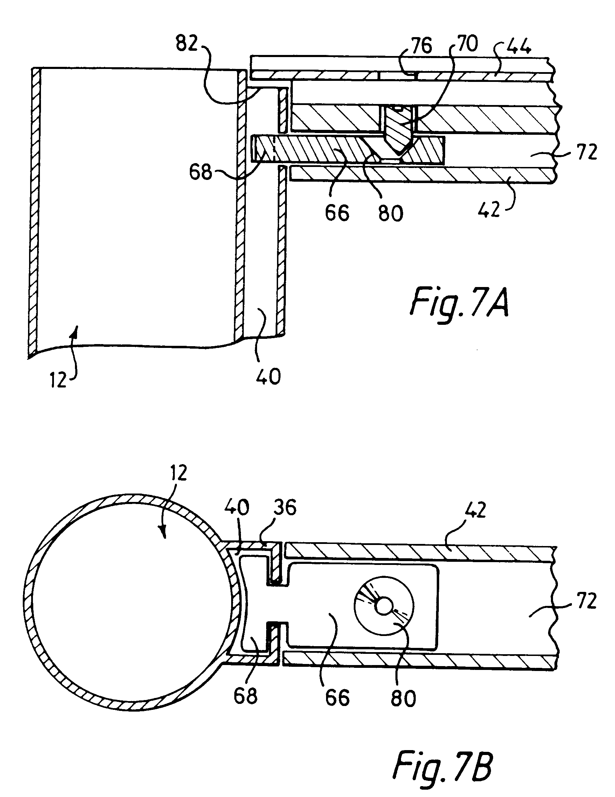

Figures 6 and 7 illustrate the manner in which a frame is assembled by effecting a joint between the cross members (the elements of which have already been fixed together) and the uprights. Figure 6 shows the relevant component parts, comprising an upright 12, cross member 14 comprising elements 42 and 44, connecting element 64 having a stem 66 and lug 68, and grub screw 70.

Figures 7A and 7B show how these elements are secured together. The first element 42 of the cross member is extruded with a longitudinal aperture 72 for receiving the stem 66 of the connecting element 64 into the end face 74 of said first element of the cross member. The connecting element 64 is first loosely held in position by screwing the grub screw 70 through a plain aperture 76 in the outer face of the second element 44 of the cross member and through a threaded aperture 78 in the first element 42 of the cross member, so that a pointed end of said grub screw partly enters a tapered aperture 80 in the stem of the connecting element 64. The lug 68 of the connecting element 64 may then be inserted into the end of the undercut slot 40 formed on the upright, insertion being limited by engagement of the end of the second element 44 of the cross member with a cutaway 82 at the end of the lipped ribs 36 of the upright which define the undercut slot. Tightening of the grub screw 70 then draws the lug 68 into tight engagement with the inside of the lipped ribs 36 of the upright, thus effecting a tight and secure joint between the upright and the cross member. The undercut slot 40 of the upright thus serves for the dual purposes of jointing with the cross member and location of a display panel.

It will be understood that the embodiment of display panel assembly above described with reference to the drawings may be modified in various ways within the scope of the invention hereinbefore defined.

## Claims

1. A display panel assembly comprising at least two frames (10) each having parallel uprights (12) on opposite sides thereof, two adjacent uprights of two adjacent frames being pivotally connected (16) to allow the plane of one frame to be variably angled relative to the plane of the other frame, each upright of a frame having two external, spaced, longitudinally extending ribs (36) directed towards the corresponding ribs on the opposite upright, thereby to define opposed coplanar slots (40) for receiving opposite edges of a display panel, the frames also each having cross members (14A, 14B) connecting the uprights, the cross members being shaped to define display panel-receiving slots (48) coplanar with the slots in the uprights, characterised in that the said slots (40, 48) are arranged to receive a display panel in the median plane of the frame, and in that the cross members but not the uprights also have parts (54) which define panel-receiving slots in spaced planes parallel to and on both sides of said median plane of the frame.

2. A display panel assembly according to claim 1, wherein each cross member comprises two elongate elements (42, 44), the first element providing the slots (48) which are coplanar with the slots (40) of the ribs on the uprights and the second element having ribs (54) which, with the side surfaces (50) of slot-defining ribs of the of the first part, define the slots in the outer planes.

3. A display panel assembly according to claim 2, characterised in that the two elements (42, 44) interconnect by means of a dovetail-type joint (46), being slid longitudinally into engagement with one another, before assembly of the frame.

4. A display panel assembly according to claim 2 or claim 3, characterised in that the outer surfaces of the second elements, which surfaces lie in planes normal to the plane of the frame to define the top and bottom peripheral edge faces of the frame, have longitudinal grooves (60) and/or longitudinal projections (62) which mate with the grooves, enabling the frames to be stacked in coplanar relationship, so that an assembly of a required height can be produced.

5. A display panel assembly according to any of claims 1 to 4, characterised in that the uprights (12) are of tubular form, each slotted or slottable to accommodate a toothed member (16) which will mate with a corresponding toothed member inserted in a slot of an upright of an adjacent frame, thereby in conjunction with a bridging element (22) interconnecting the axes of the two tubular uprights to provide the pivotal connection between the two uprights, and thus between the two frames.

6. A display panel assembly according to claim 6, characterised in that two pivotal connections comprising toothed members (16) are provided, respectively adjacent the top and the bottom of the two frames.

7. A display panel assembly according to claim 7, characterised in that each pair of toothed members is slotted to accommodate the bridging element.

8. A display panel assembly according to any of claims 5 to 7, characterised in that the angular extent of the slots in the uprights is large enough to permit relative rotation of the two frames through 360 degrees.

9. A display panel assembly according to any of claims 5 to 8, characterised in that assembly of the pivotal interconnections is enabled by open ends to the tubular uprights (12), which permit headed locating screws (24) to be fixed in position through central apertures in the gear wheels (20) and in rounded enlargements at the ends of the bridging element (28).

10. A display panel assembly according to claim 9, characterised in that the open ends of the tubular uprights (12) are adapted to receive interconnecting pegs (18) inserted between the ends of adjoining uprights when frames are stacked on top of one another.

11. A display panel assembly according to any of claims 1 to 10, characterised in that each upright (10) is an extruded circularly cross-sectioned pair of longitudinally extending external ribs (36), said pair of ribs having inturned lips (38) so as to define an undercut panel-receiving slot (40).

12. A display panel assembly according to claim 11, characterised in that the cross members (42, 44) are shaped to define matching undercut panel-receiving slots in the median plane of the frame.

13. A display panel assembly according to claim 12, characterised in that a cross member (42,44) connects to an upright (12) by means of a connecting element (64) having a stem (66) received in a slot (72) in the end face of the cross member and a lug (68) received in the undercut slot (40) of the upright, together with a grub screw (70) screwing laterally into the cross member to engage into a tapered recess or aperture (80) in the stem of the connecting element, whereby said element is drawn into tight engagement with the underside of the lips of the slot-defining ribs of the upright.

14. A display panel assembly according to any preceding claim, characterised in that the principal parts of the frame are produced from five extruded sections of aluminium, consisting of a tubular section for forming the uprights (12), a section for forming the first elements (42) of the cross members, respective sections for forming the second elements (44) of the cross members, one with grooves in its outer face and one with projections on its outer face, and one with projections on its outer face, and a gear wheel section from which the gear wheels (16) are produced by slicing.

## Patentansprüche

1. Eine Displaytafel-Anordnung mit mindestens zwei Rahmen (10), die an ihren gegenüberliegenden Seiten parallel zueinander hochstehende Schenkel (12) aufweisen, wobei zwei benachbarte hochstehende Schenkel von zwei benachbarten Rahmen schwenkbar miteinander verbunden sind (16), so daß die Ebene eines Rahmens in ihrem Winkel gegenüber der Ebene des anderen Rahmens geändert werden kann, jeder hochstehende Schenkel eines Rahmens zwei äußere, auseinanderliegende, in Längsrichtung verlaufende und auf die entsprechenden Rippen auf dem gegenüberliegenden hochstehenden Schenkel gerichtete Rippen (36) aufweist, so daß dadurch sich gegenüberliegende koplanare Schlitze (40) zur Aufnahme sich gegenüberliegender Kanten einer Displaytafel entstehen, die Rahmen auch jeweils die hochstehenden Schenkel verbindende Querglieder (14A, 14B) aufweisen, die Querglieder so geformt sind, daß sie mit den Schlitzen in den hochstehenden Schenkeln koplanare, die Displaytafel aufnehmende Schlitze (48) ausbilden, dadurch gekennzeichnet, daß die Schlitze (40, 48) so angeordnet sind, daß sie eine Displaytafel in der Mittelebene des Rahmens aufnehmen, und daß die Querglieder, aber nicht die hochstehenden Schenkel, auch Teile (54) aufweisen, die in auseinanderliegenden Ebenen, die parallel zu und auf beiden Seiten der Mittelebene des Rahmens angeordnet sind, die Tafel aufnehmende Schlitze ausbilden.

2. Eine Displaytafel-Anordnung nach Anspruch 1, wobei jedes Querglied zwei langgestreckte Elemente (42, 44) aufweist, das erste Element die Schlitze (48) ausbildet, die mit den Schlitzen (40) der Rippen auf den hochstehenden Schenkeln koplanar sind, und das zweite Element Rippen (54) aufweist, die mit den Seitenflächen (50) der den Schlitz ausbildenden Rippen des ersten Teiles die Schlitze in den Außenebenen ausbilden.

3. Eine Displaytafel-Anordnung nach Anspruch 2, dadurch gekennzeichnet, daß die beiden Elemente (42, 44) über ein schwalbenschwanzartiges Gelenk (46) miteinander verbunden sind und vor dem Zusammenbau des Rahmens in Längsrichtung in gegenseitige Anlage geschoben werden.

4. Eine Displaytafel-Anordnung nach Anspruch 2 oder Anspruch 3, dadurch gekennzeichnet, daß die Außenflächen der zweiten Elemente, die zum Ausbilden der oberen und unteren Umfangskantenseiten des Rahmens in zu dessen Ebene senkrecht liegenden Ebenen liegen, Längsnuten (60) und/oder Längsvorsprünge (62), die auf die Nuten abgestimmt sind, aufweisen, damit die Rahmen in koplanarer Beziehung zusammengesetzt werden können, so daß sich eine Anordnung einer erforderlichen Höhe herstellen läßt.

5. Eine Displaytafel-Anordnung nach irgendeinem der Ansprüche 1 bis 4, dadurch gekennzeichnet, daß die hochstehenden Schenkel (12) Rohrform aufweisen und zur Aufnahme eines Zahngliedes (16), das auf ein entsprechendes in einen Schlitz eines hochstehenden Schenkels eines benachbarten Rahmens eingestecktes Zahnglied abgestimmt ist, jeweils geschlitzt oder schlitzbar sind, um damit in Verbindung mit einem die Achsen der beiden rohrförmigen hochstehenden Schenkel verbindenden Überbrückungselement (22) die Schwenkverbindung zwischen den beiden hochstehenden Schenkeln und damit zwischen den beiden Rahmen zu ergeben.

6. Eine Displaytafel-Anordnung nach Anspruch 6, dadurch gekennzeichnet, daß zwei Schwenkverbindungen aus Zahngliedern (16) an der Oberseite bzw. am Boden der beiden Rahmen vorgesehen sind.

7. Eine Displaytafel-Anordnung nach Anspruch 7, dadurch gekennzeichnet, daß jedes Paar der Zahnglieder zur Aufnahme des Überbrückungselementes geschlitzt ist.

8. Eine Displaytafel-Anordnung nach irgendeinem der Ansprüche 5 bis 7, dadurch gekennzeichnet, daß das Winkelmaß der Schlitze in den hochstehenden Schenkeln groß genug ist, um eine Relativdrehung der beiden Rahmen über 360° zuzulassen.

9. Eine Displaytafel-Anordnung nach irgendeinem der Ansprüche 5 bis 8, dadurch gekennzeichnet, daß der Zusammenbau der Schwenkverbindungen durch die offenen Enden der rohrförmigen hochstehenden Schenkel (12) ermöglicht wird, die das Befestigen von einen Kopf aufweisenden Stellschrauben (24) in ihrer Lage in Mittelöffnungen in Zahnrädern (20) und in abgerundeten Vergrößerungen an den Enden des Überbrückungselementes (28) zulassen.

10. Eine Displaytafel-Anordnung nach Anspruch 9, dadurch gekennzeichnet, daß die offenen Enden der rohrförmigen hochstehenden Schenkel (12) bei übereinandergesetzten Rahmen zwischen den Enden benachbarter hochstehender Schenkel eingesetzte Verbindungsdübel (18) aufnehmen können.

11. Eine Displaytafel-Anordnung nach irgendeinem der Ansprüche 1 bis 10, dadurch gekennzeichnet, daß jeder hochstehende Schenkel (10) ein extrudiertes, Kreisquerschnitt aufweisendes Paar von in Längsrichtung verlaufenden Außenrippen (36) umfaßt und das Rippenpaar zum Ausbilden eines hinterschnittenen, die Tafel aufnehmenden Schlitzes (40) nach innen gewendete Lippen (38) aufweist.

12. Eine Displaytafel-Anordnung nach Anspruch 11, dadurch gekennzeichnet, daß die Querglieder (42, 44) so geformt sind, daß sie in der Mittelebene des Rahmens angepaßte, hinterschnittene, die Tafel aufnehmende Schlitze ausbilden.

13. Eine Displaytafel-Anordnung nach Anspruch 12, dadurch gekennzeichnet, daß ein Querglied (42, 44) mit einem hochstehenden Schenkel (12) über ein Verbindungselement (64) verbunden ist mit einem in einem Schlitz (72) in der Stirnseite des Quergliedes aufgenommenen Schaft (66) und einem in dem hinterschnittenen Schlitz (40) des hochstehenden Schenkels aufgenommenen Ansatz (68), zusammen mit einer seitlich in das Querglied eingeschraubten Madenschraube (70) zur Anlage in einer konischen Ausnehmung oder Öffnung (80) in dem Schaft des Verbindungselementes, wodurch das Element mit der Unterseite der Lippen der den Schlitz umschließenden Rippen des hochstehenden Schenkels in enge Anlage gezogen wird.

14. Eine Displaytafel-Anordnung nach irgendeinem der vorhergehenden Ansprüche, dadurch gekennzeichnet, daß die Hauptteile des Rahmens aus fünf aus Aluminium gezogenen Abschnitten hergestellt werden, die aus einem rohrförmigen Abschnitt zum Ausbilden der hochstehenden Schenkel (12), einem Abschnitt zum Ausbilden der ersten Elemente (42) der Querglieder, entsprechenden Abschnitten zum Ausbilden der zweiten Elemente (44) der Querglieder, eins mit Nuten in seiner Außenseite und eins mit Vorsprüngen auf seiner Außenseite und eins mit Vorsprüngen auf seiner Außenseite, und einem Zahnradabschnitt bestehen, aus dem die Zahnräder (16) durch Schneiden gebildet werden.

## Revendications

1. Un assemblage de panneaux de visualisation comprenant au moins deux cadres (10) ayant chacun des montants parallèles (12) sur leurs côtés opposés, deux montants adjacents de deux cadres adjacents étant accouplés de façon pivotante (16) pour permettre de donner au plan d'un cadre un angle variable par rapport au plan de l'autre cadre, chaque montant d'un cadre ayant deux ailes externes espacées (36), s'étendant longitudinalement, qui sont dirigées vers les ailes correspondantes sur le montant en regard, pour définir ainsi des rainures coplanaires en regard (40) pour recevoir des bords opposés d'un panneau de visualisation, chacun des cadres comportant également des pièces transversales (14A, 14B) reliant les montants, les pièces transversales ayant une forme conçue pour définir des rainures de réception de panneau de visualisation (48) coplanaires par rapport aux rainures dans les montants, caractérisé en ce que les rainures (40, 48) sont conçues de façon à recevoir un panneau de visualisation dans le plan médian du cadre, et en ce que les pièces transversales mais non les montants comportent également des pièces (54) qui définissent des rainures de réception de panneau dans des plans espacés qui sont parallèles au plan médian du cadre et qui se trouvent de part et d'autre de ce plan médian.

2. Un assemblage de panneaux de visualisation selon la revendication 1, dans lequel chaque pièce transversale comprend deux éléments allongés (42, 44), le premier élément définissant les rainures (48) qui sont coplanaires par rapport aux rainures (40) des ailes sur les montants, et le second élément comportant des ailes (54) qui, avec les surfaces latérales (50) d'ailes de définition de rainures du premier élément, définissent les rainures dans les plans extérieurs.

3. Un assemblage de panneaux de visualisation selon la revendication 2, caractérisé en ce que les deux éléments (42, 44) sont mutuellement reliés au moyen d'un joint du type queue d'aronde (45) et on les fait glisser longitudinalement pour les accoupler mutuellement, avant l'assemblage du cadre.

4. Un assemblage de panneaux de visualisation selon la revendication 2 ou la revendication 3, caractérisé en ce que les surfaces extérieures des seconds éléments, qui sont des surfaces qui s'étendent dans des plans normaux au plan du cadre, pour définir les faces des bords périphériques supérieur et inférieur du cadre, ont des rainures longitudinales (60) et/ou des saillies longitudinales (62) qui s'adaptent dans les rainures, permettant ainsi d'empiler les cadres dans une relation coplanaire, de façon à pouvoir former un assemblage d'une hauteur exigée.

5. Un assemblage de panneaux de visualisation selon l'une quelconque des revendications 1 à 4, caractérisé en ce que les montants (12) ont une forme tubulaire, chacun d'eux étant fendu ou pouvant être fendu pour recevoir une pièce dentée (16) qui engrène avec une pièce dentée correspondante qui est insérée dans une fente d'un montant d'un cadre adjacent, pour établir ainsi l'accouplement pivotant entre les deux montants et donc entre les deux cadres, en association avec un élément de liaison en pont (22) qui relie les axes des deux montants tubulaires.

6. Un assemblage de panneaux de visualisation selon la revendication 5, caractérisé en ce qu'il comprend deux accouplements pivotants comportant des éléments dentés (16), respectivement adjacents au haut et au bas des deux cadres.

7. Un assemblage de panneaux de visualisation selon la revendication 5, caractérisé en ce que chaque paire d'éléments dentés est fendue pour recevoir l'élément de liaison en pont.

8. Un assemblage de panneaux de visualisation selon l'une quelconque des revendications 5 à 7, caractérisé en ce que l'étendue angulaire des fentes dans les montants est suffisamment grande pour permettre une rotation relative des deux cadres sur 360 degrés.

9. Un assemblage de panneaux de visualisation selon l'une quelconque des revendications 5 à 8, caractérisé en ce que le montage des accouplements pivotants est rendu possible par des extrémités ouvertes des montants tubulaires (12), qui permettent de fixer en position des vis de positionnement à tête (24), à travers des ouvertures centrales dans les roues dentées (20) et dans des parties agrandies arrondies qui sont formées aux extrémités de l'élément de liaison en pont (28).

10. Un assemblage de panneaux de visualisation selon la revendication 9, caractérisé en ce que les extrémités ouvertes des montants tubulaires (12) sont conçues pour recevoir des chevilles d'accouplement (18) qui sont introduites entre les extrémités de montants adjacents lorsque des cadres sont empilés l'un sur l'autre.

11. Un assemblage de panneaux de visualisation selon l'une quelconque des revendications 1 à 10, caractérisé en ce que chaque montant consiste en une paire d'ailes externes (36), s'étendant en direction longitudinale, extrudées et ayant une section transversale circulaire, cette paire d'ailes comportant des lèvres (38) tournées vers l'intérieur, de façon à définir une rainure de réception de panneau évidée intérieurement (40).

12. Un assemblage de panneaux de visualisation selon la revendication 11, caractérisé en ce que les pièces transversales (42, 44) ont une forme qui définit des rainures de réception de panneau correspondantes, évidées intérieurement, dans le plan médian du cadre.

13. Un assemblage de panneaux de visualisation selon la revendication 12, caractérisé en ce qu'une pièce transversale (42, 44) est reliée à un montant (12) au moyen d'un élément de liaison (64) ayant une queue (66) qui est reçue dans une encoche (72) dans la face d'extrémité de la pièce transversale, et une tête (68) qui est reçue dans la rainure évidée intérieurement (40) du montant, en association avec une vis sans tête (70) qui est vissée latéralement dans la pièce transversale, pour pénétrer dans une cavité ou une ouverture fraisée (80) dans la queue de l'élément de liaison, grâce à quoi cet élément est tiré pour venir en contact ferme avec la face inférieure des lèvres des ailes du montant, définissant la rainure.

14. Un assemblage de panneaux de visualisation selon l'une quelconque des revendications précédentes, caractérisé en ce que les principaux éléments du cadre sont produits à partir de cinq sections extrudées en aluminium, comprenant une section tubulaire pour former les montants (12), une section pour former les premiers éléments (42) des pièces transversales, des sections respectives pour former les seconds éléments (44) des pièces transversales, l'une avec des rainures dans sa face extérieure et l'autre avec des saillies sur sa face extérieure, et une section de roues dentées à partir de laquelle les roues dentées (16) sont obtenues par découpage.
